# EUROPÄISCHE PATENTSCHRIFT

(11) **EP 1 524 209 B1**
(45) Veröffentlichungstag und Bekanntmachung des Hinweises auf die Patenterteilung: **25.05.2005**
(21) Anmeldenummer: 03023433.0
(22) Anmeldetag: 17.10.2003
(51) Int. Cl.: B65G 1/04

(54) **Verfahren und Vorrichtung zum gleichzeitigen Auslagern mehrerer Stückgüter aus einem automatisierung Regallager**
Method and device for simultaneously retrieving a plurality of articles in a shelf storage
Méthode et dispositif pour prélever simultanément plusieurs articles d'un magasin à rayonnage

(43) Veröffentlichungstag der Anmeldung: 20.04.2005
(73) Patentinhaber: ROWA AUTOMATISIERUNGSSYSTEME GMBH & CO. KG, 53539 KELBERG (DE)
(72) Erfinder: Morsink, Hendrik, 9431 Westerbork (NL); Willems, Markus, 54990 Daun (DE); Wagner, Rudolf M., 53539 Kelberg (DE)
(74) Vertreter: Schmidt, Frank-Michael, Dr.-Ing.

(56) Entgegenhaltungen:
- DE-A- 19 509 951

## Beschreibung

Die Erfindung betrifft ein automatisiertes Regallager zum Lagern von Stückgütern mit wenigstens einem mehrere übereinander angeordnete, sich in einer Längsrichtung erstreckende Regalböden aufweisenden Regal und wenigstens einem eine Greifeinrichtung aufweisenden und vor dem Regal in vertikaler Richtung und in der Längsrichtung bewegbaren Regalbediengerät sowie ein Verfahren zum Auslagern von Stückgütern aus einem solchen automatisierten Regallager.

Derartige Regallager bzw. Verfahren zur Auslagerung werden beispielsweise bei automatisierten Apothekenlagern verwendet, bei denen eine große Anzahl verschiedener und unterschiedlich dimensionierter quaderförmiger Arzneimittelpackungen (Stückgüter) chaotisch und platzoptimiert auf langgestreckten Regalböden mehrerer Regale gelagert werden. Die in solchen Regalen gelagerten Arzneimittelpackungen werden mit Hilfe von Regalbediengeräten ein- bzw. ausgelagert, wobei die Regalbediengeräte Greifeinrichtungen zum Ergreifen einzelner Arzneimittelpackungen aufweisen. Zur Einlagerung der Arzneimittelpackungen in derartige automatisierte Lager werden die Arzneimittelpackungen identifiziert, vermessen (d. h. die Abmessungen in den drei Dimensionen bestimmt) und in einen Greifbereich der Greifeinrichtung eines Regalbediengeräts transportiert. DE 195 09 951 C2 offenbart ein solches automatisiertes Regallager gemäß dem Oberbegriff des Anspruchs 11. Das Regalbediengerät ergreift die Arzneimittelpackungen einzeln und transportiert diese zu einem vorgegebenen Platz auf einem Regalboden. Zur optimalen Raumausnutzung werden die Regalböden dicht belegt, wobei nebeneinander Arzneimittelpackungen unterschiedlicher Abmessungen und unterschiedlicher Art gelagert werden können. Wenn - beispielsweise aufgrund eines Wunsches eines Kunden der Apotheke - eine bestimmte Arzneimittelpackung ausgelagert werden soll, so steuert das Regalbediengerät den Lagerort der gewünschten Arzneimittelpackung an, ergreift die Arzneimittelpackung und gibt diese an eine Ausgabestelle bzw. an eine Transporteinrichtung, die die Arzneimittelpackung zu einer Ausgabestelle (beispielsweise im Verkaufsraum einer Apotheke) transportiert, ab. Naturgemäß wird jede von einem Kunden gewünschte Arzneimittelpackung einzeln dem Regal entnommen und zu der Ausgabestelle bzw. zu der mit der Ausgabestelle verbundenen Transporteinrichtung befördert.

Wenn einem Kunden mehrere Arzneimittelpackungen verschiedener oder gleicher Art ausgegeben werden sollen, so sind entsprechend viele Transportvorgänge von dem Regalbediengerät auszuführen. Wenn der Kunde beispielsweise die Ausgabe von mehreren (beispielsweise vier) Arzneimittelpackungen derselben Art anfordert, so sind in der Regel mehrere (d. h. vier) Transportvorgänge von jeweils einem Lagerort in einem Regal zu einer Ausgabestelle bzw. zu einer zu der Ausgabestelle führenden Transporteinrichtung erforderlich. Die Zeitdauer zur Ausgabe dieser Arzneimittelmenge entspricht etwa dem mehrfachen (z.B. vierfachen) der Zeitdauer der Ausgabe einer Einzelpackung.

Bei Apothekeneinrichtungen für Apotheken, bei denen Fälle der Ausgabe mehrerer gleicher Packungen und/oder der Ausgabe häufig benötigter Arzneimittelpackungen wiederholt und häufig auftreten, wurde vorgeschlagen, ein automatisierte Apothekenregallager der o. g. Art mit einem automatisierten Stückgutlager eines Schachttyps zu kombinieren. Bei Schacht-Lagereinrichtungen werden in einem Lagerschacht eine größere Anzahl von Packungen gleicher Art und gleicher Dimension als Stapel eines First-In-First-Out-Lagers gelagert, wobei die Packungen an einem Ende (auch mehrfach) entnommen und am gegenüberliegenden Ende des Stapels neu zugeführt werden. Es gibt somit automatisierte Apothekenlager, die das o. g. automatisierte Regallager mit mehreren Schachtsystemen für häufig und jeweils mehrfach benötigte Arzneimittelpackungen kombinieren, wobei jeweils ein Schacht für eine Art einer Arzneimittelpackung vorgesehen ist. Diese Lagerkombinationen weisen eine Reihe von Nachteilen auf. Ein Nachteil besteht darin, daß das Kombinieren unterschiedlicher Lagertypen die Gesamtkosten der Anlage erhöht. Ein weiterer Nachteil der Schachtsysteme besteht darin, daß der für die Schächte erforderliche Raumbedarf auch dann vorgehalten werden muß, wenn der Schacht nur mit wenigen Packungen bestückt ist. Darüber hinaus ist die Schachteinteilung statisch, d. h. das Sortiment der in den Schachtsystemen gelagerten Artikel ist wenig flexibel. Für jeden neuen Artikel muß jeweils ein neuer Schacht angelegt werden. Bei einer Veränderung der Dimensionen eines Artikels muß der zugehörige Schacht angepaßt werden. Dies erhöht den Aufwand und die Kosten der Lagerung zusätzlich.

Aufgabe der Erfindung ist es daher, die o. g. Nachteile der kombinierten automatisierten Regal-Schacht-Lager zu vermeiden und gleichzeitig die Geschwindigkeit der Ausgabe häufig benötigter Arzneimittel, bei denen in der Regel gleichzeitig mehrere Packungen auszugeben sind, zu erhöhen.

Diese Aufgabe wird erfindungsgemäß durch ein Verfahren mit den Merkmalen des Patentanspruchs 1 bzw. durch ein automatisiertes Regallager mit den Merkmalen des Patentanspruchs 11 gelöst.

Bei dem erfindungsgemäßen Verfahren zum Auslagern von Stückgütern aus einem automatisierten Regallager mit wenigstens einem mehrere übereinander angeordnete, sich in einer Längsrichtung erstreckende Regalböden aufweisenden Regal und wenigstens einem eine Greifeinrichtung aufweisenden und vor dem Regal in vertikaler Richtung und in der Längsrichtung bewegbaren Regalbediengerät werden zunächst mehrere Stückgüter auf einem Regalboden gelagert. Die Stückgüter sind beispielsweise Arzneimittelpackungen; das Verfahren ist aber auch für andere Arten von Stückgütern geeignet, insbesondere wenn die in dem automatisierten Regallager gelagerten Stückgüter eine quaderförmige Gestalt haben und viele unterschiedliche Abmessungen in den drei Raumkoordinaten haben können. Die Greifeinrichtung umfaßt beispielsweise einen Sauggreifer und/oder einen Backengreifer. Das Regalbedienge-rät ist vorzugsweise nicht nur in der vertikalen Richtung und der Längsrichtung bewegbar sondern in sämtlichen drei Raumkoordinaten, wobei zusätzlich eine Drehbewegung, auch in mehreren Achsen, möglich sein kann. Die mehreren Stückgüter werden auf einem Regalboden gelagert, wobei es sich dabei entweder um eine Einlagerung von dem Regallager neu zugeführten Stückgütern oder um eine Umlagerung von bereits eingelagerten Stückgütern aus anderen Lagerplätzen des Regallagers handelt. Anschließend werden ein oder mehrere auszulagernde Stückgüter der mehreren Stückgüter mit Hilfe einer Schiebeeinrichtung auf dem Regalboden in horizontaler Richtung derart verschoben, daß sie über einen Rand hinaus vom Regalboden heruntergeschoben werden, ohne dabei von der Greifeinrichtung des Bediengeräts festgehalten zu werden. Dies bedeutet, daß die Stückgüter nicht, wie es bekannt ist, von einem Greifer jeweils einzeln erfaßt und über einen vorderen, dem Bediengerät zugewandten Rand des Regalbodens hinweg auf einen Auflagetisch des Bediengeräts gezogen werden. Vielmehr werden die Stückgüter lediglich von einer Schiebeeinrichtung geschoben, ohne dabei von einer Greifeinrichtung des Bediengeräts festgehalten zu werden. Die Stückgüter werden beispielsweise in Längsrichtung des Regalbodens über einen quer zur Längsrichtung verlaufenden Rand oder quer zur Längsrichtung über den dem Bediengerät abgewandten Rand des Regalbodens hinweg geschoben. Anschließend werden die von dem Regalboden heruntergeschobenen auszulagernden Stückgüter aufgefangen (d. h. beispielsweise von einer Transportfläche aufgenommen oder im Hinabfallen aufgefangen) und zu einer Ausgabestelle transportiert (z.B. mit Hilfe von Transportbändern).

Das erfindungsgemäße Verfahren gestattet die gleichzeitige Auslagerung mehrerer Stückgüter, die zuvor auf einer an den Rand des Regalbodens angrenzenden Fläche des Regalbodens gelagert worden sind. Die Ausführung des Verfahrens erfordert nur geringe bauliche Modifikationen der vorhandenen automatisierten Regallager, so daß eine erheblich preiswertere Lösung als bei der Kombination von Regallagern und Schachtlagern zur Verfügung gestellt werden kann. Im Unterschied zu den Schachtlagern ist die vorgeschlagene Lösung flexibel, d. h. für unterschiedlichste Packungsgrößen und auch wechselnde Packungsgrößen anwendbar.

Die Schiebeeinrichtung kann eine vom Regalbediengerät getrennte Einrichtung mit einer separaten Steuerung sein. Jedoch ist eine bevorzugte Weiterbildung des erfindungsgemäßen Verfahrens dadurch gekennzeichnet, daß die auszulagernden Stückgüter mit Hilfe einer mit dem Bediengerät verbundenen Schiebeeinrichtung auf dem Regalboden verschoben werden. Dies hat den Vorteil, daß die mehrachsige Steuerung des Bediengeräts zur Betätigung der Schiebeeinrichtung genutzt werden kann. Vorzugsweise werden die auszulagernden Stückgüter mit Hilfe eines Elements eines mit dem Bediengerät verbundenen Backengreifers verschoben. Dies schafft die Möglichkeit, mit Hilfe derselben Zustellbewegung sowohl den Backengreifer zum Ergreifen eines Stückguts in einer Richtung quer zur Längsrichtung des Regals zu bewegen als auch den Backengreifer neben die auszulagernden Stückgüter über dem Regalboden zu positionieren und anschließend in Längsrichtung auf die auszulagernden Stückgüter zu zu bewegen, so daß diese vom Regalboden heruntergeschoben werden. Vorzugsweise ist der Backengreifer so ausgebildet, daß eine äußere Seitenfläche eine quer zur Längsrichtung des Regals orientierte Schiebefläche bildet. Die auszulagernden Stückgüter werden vorzugsweise in eine quer zu einer normalen Ein- und Auslagerrichtung orientierten Richtung über den Rand des Regalbodens heruntergeschoben, wobei bei einer bevorzugten Ausführungsform die auszulagernden Stückgüter in der Längsrichtung über einen quer, vorzugsweise rechtwinklig, zur Längsrichtung verlaufenden Rand des Regalbodens heruntergeschoben werden.

Bei einer bevorzugten Weiterbildung des erfindungsgemäßen Verfahrens werden vor dem horizontalen Verschieben mehrere zusammen auszulagernde Stückgüter benachbart zu dem Rand auf dem Regalboden als zusammenhängende Gruppe gelagert (d. h. zusammengestellt). Dies geschieht beispielsweise durch Umlagerung der Stückgüter aus ihren ursprünglichen Positionen. Diese Weiterbildung gestattet beispielsweise eine Vor-Kommissionierung einer vorgegebenen Menge von Arzneimittelpackungen, die dann mit Hilfe einer einzigen Bewegung der Schiebeeinrichtung, vorzugsweise der am Bediengerät befestigten Schiebeeinrichtung, zusammen ausgelagert werden kann. So kann beispielsweise eine vorgegebene Gruppe von Arzneimitteln aufgrund einer Vorab-Fernbestellung durch einen Kunden oder einen Arzt in der Apotheke bereits zusammengestellt werden, und der Kunde bzw. Patient kann diese zusammengestellte Arzneimittel-Bestellung dann bei einem darauffolgenden Besuch in der Apotheke mit einer relativ kurzen Auslagerungszeit erhalten. Bei einer alternativen Anwendung dieser bevorzugten Weiterbildung können auch eine Mehrzahl gleichartiger Arzneimittel als zusammenhängende Gruppe am Rand des Regalbodens gelagert werden, wobei es sich dabei vorzugsweise um häufig benötigte, d. h. in kurzen Abständen hintereinander wiederholt oder gleichzeitig mehrfach benötigte Arzneimittel handelt. Eine bevorzugte Weiterbildung dieser Ausführungsform ist dadurch gekennzeichnet, daß beim Verschieben wenigstens ein (benachbart zu der Gruppe auszulagernder Stückgüter) auf dem Regalboden angeordnetes Stückgut von der Greifeinrichtung des Bediengeräts gegriffen und horizontal in Richtung des Randes des Regalbodens derart verschoben wird, daß dabei einerseits die Gruppe auszulagernder Stückgüter von dem Regalboden heruntergeschoben wird und andererseits das wenigstens eine ergriffene Stückgut zu einem benachbart zu dem Rand des Regalbodens angeordneten Ort umgelagert wird. Alternativ können bei dieser bevorzugten Weiterbildung des Verfahrens von der Greifeinrichtung auch mehrere nebeneinander und/oder hintereinander angeordnete Stückgüter gleichzeitig gegriffen und verschoben werden. Dies stellt eine vorteilhafte Erweitung der Funktionalität der normalen Backengreifeinrichtung dar. Die dabei gegriffene und an den Rand des Regalbodens umgelagerte Gruppe von Stückgütern kann anschließend wiederum eine Gruppe auszulagernder Stückgüter, die durch Schieben über den Rand hinaus ausgelagert werden sollen, bilden.

Bei einer Weiterbildung des erfindungsgemäßen Verfahrens werden die vom Regalboden heruntergeschobenen auszulagernden Stückgüter mit Hilfe einer Fallschacht-Anordnung aufgefangen. Die Fallschacht-Anordnung kann ähnlich der in der Offenlegungsschrift DE 100 48 993 A1 beschriebenen Anordnung ausgebildet sein. Es sind aber auch Anordnungen mit geneigten Ebenen oder gespannten Textilbahnen denkbar.

Bei einer anderen Ausführungsform werden die vom Regalboden heruntergeschobenen auszulagernden Stückgüter von einem eine Transportfläche aufweisenden Lift aufgefangen. Die Transportfläche wird dabei vor dem Schritt des Verschiebens derart bewegt, daß sie benachbart zu dem Rand des Regalbodens und in derselben horizontalen Ebene oder in einem vorgegebenen Abstand unterhalb dieser Ebene des Regalbodens positioniert wird. Die Transportfläche des Liftes ist vorzugsweise ausreichend groß, um die gleichzeitig auszulagernde Gruppe von Stückgütern nebeneinander aufnehmen zu können. Alternativ wäre auch ein Übereinanderstapeln auszulagernder Stückgüter auf der Transportfläche des Liftes denkbar.

Das erfindungsgemäße automatisierte Regallager zum Lagern von Stückgütern mit wenigstens einem mehrere übereinander angeordnete, sich in einer Längsrichtung erstreckende Regalböden aufweisenden Regal und wenigstens einem eine Greifeinrichtung aufweisenden und vor dem Regal in vertikaler Richtung und in der Längsrichtung bewegbaren Regalbediengerät weist eine Einrichtung zum horizontalen Verschieben der Stückgüter auf den Regalböden in deren Längsrichtung, eine Auffangeinrichtung und eine mit der Auffangeinrichtung gekoppelte Transporteinrichtung auf. Die Auffangeinrichtung ist benachbart zu einem Rand in wenigstens eines Regalbodens so angeordnet, daß sie von dem wenigstens einen Regalboden über dessen Rand hinaus heruntergeschobene Stückgüter aufnehmen kann. Die Transporteinrichtung kann die von der Auffangeinrichtung aufgenommenen Stückgüter zu einer Ausgabestelle transportieren. Während bei der normalen (bekannten) Ein- und Auslagerung die Stückgüter einzeln auf den Regalböden mit Hilfe der Greifeinrichtung quer zur Längsrichtung der Regalböden verschoben werden, gestattet die zusätzliche Einrichtung ein Verschieben der Stückgüter auf den Regalböden in deren Längsrichtung, was die Möglichkeiten des Umpositionierens und Gruppierens der Stückgüter erheblich erweitert und flexibler gestaltet. In Kombination mit der Auffang- und der Transporteinrichtung ermöglicht diese Erweiterung eine schnellere Auslagerung vorgegebener Gruppen von Stückgütern, beispielsweise von Arzneimittelpackungen.

Vorteilhafte und/oder bevorzugte Weiterbildungen des erfindungsgemäßen automatisierten Regallagers sowie des erfindungsgemäßen Verfahrens zum Auslagern von Stückgütern sind in den Unteransprüchen gekennzeichnet.

Im folgenden wird die Erfindung anhand von in der Zeichnung schematisch dargestellten bevorzugten Ausführungsformen näher beschrieben. In der Zeichnung zeigen:
Figur 1 eine schematische Vorderansicht eine Ausführungsform des erfindungsgemäßen automatisierten Regallagers mit einem vor einem Regal verfahrbaren Bediengerät; und
Figur 2 eine schematische Darstellung der Anordnung von Arzneimittelpackungen auf zwei zu beiden Seiten einer Auffangeinrichtung angeordneten Regalböden, die das Ergreifen von Packungen mit dem Bediengerät und die beim Verschieben der Arzneimittelpackungen ausgeführten Bewegungen veranschaulichen.

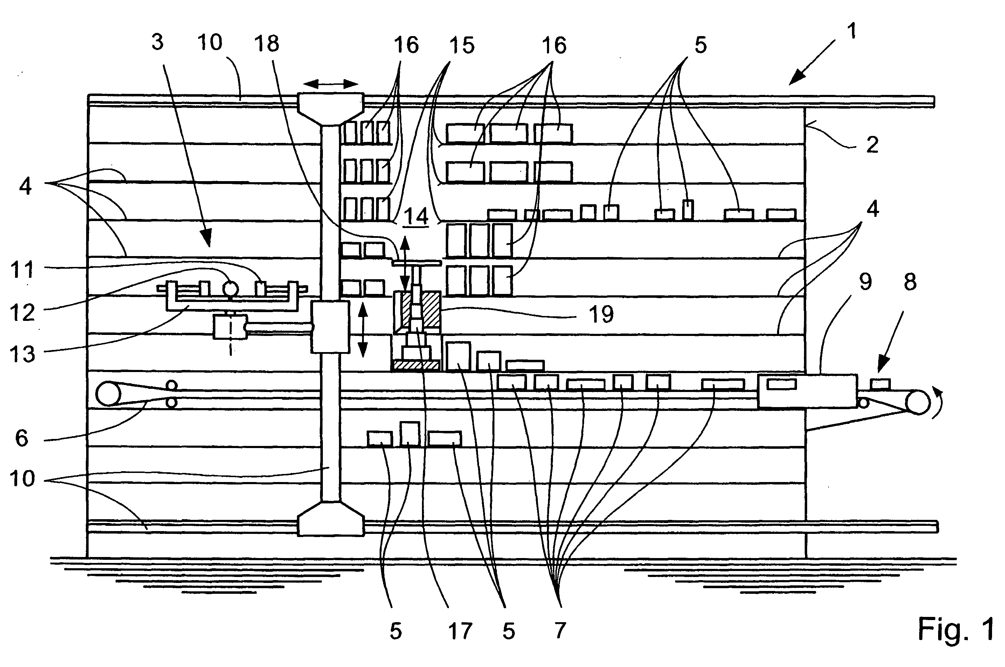

Figur 1 zeigt eine schematische Vorderansicht eines automatisierten Regallagers 1 mit einem Regal 2 und einem vor dem Regal 2 in vertikaler und horizontaler Richtung verfahrbaren Bediengerät 3. Das Regal 2 weist mehrere Regalböden 4 auf. Um eine glatte Oberfläche zu gewährleisten, weist das Regal 2 vorzugsweise Glasböden 4 auf. Auf den Glasböden 4 werden in chaotischer Weise bei optimaler Raumausnutzung Arzneimittelpackungen 5 gelagert. Zum Erleichtern der Einlagerung der Arzneimittelpackungen befindet sich zwischen zwei Regalböden 4 des Regals 2 ein umlaufendes Förderband 6, auf dem Arzneimittelpackungen 7 von einer Aufgabestation 8 über eine Identifizierungseinrichtung 9 in das Innere des Regals 2 transportiert werden. Dort können die Arzneimittelpackungen 7 von dem Bediengerät 3 von dem Förderband 6 entnommen und zu einer vorgegebenen Position auf einem Regalboden 4 transportiert werden. Das Bediengerät 3 ist mit Hilfe von Führungsschienen 10 in horizontaler und vertikaler Richtung vor dem Regal 2 verfahrbar. Das Bediengerät weist eine Greifeinrichtung auf, die beispielsweise einen Backengreifer 11 und einen Sauggreifer 12 umfaßt. Während des Transports einer Arzneimittelpackung von einem Ort auf dem Transportband 6 zu einem Ort auf einem Regalboden 4 oder zwischen zwei Orten auf Regalböden 4 oder von einem Ort auf einem Regalboden zu einer Ausgabestelle wird die Arzneimittelpackung auf einer Auflagefläche 13 des Bediengeräts 3 gehalten. Die allgemeine Funktionsweise des automatisierten Regallagers und der Einlagerung von Stückgütern mit Hilfe des zwischen zwei Regalböden angeordneten Transportbandes 6 ist beispielsweise in der Patentschrift DE 195 09 951 C2 beschrieben.

Gemäß einer Ausführungsform der Erfindung wird nunmehr zwischen den Regalböden 4 ein senkrechter Schacht 14 gebildet. An in Regallängsrichtung einander gegenüberliegenden Seiten des Schachts 14 grenzen Ränder 15 der Regalböden 4 an. Benachbart zu den Rändern 15 werden auf den Regalböden 4 Arzneimittelpackungen 16 angeordnet, wobei es sich bei diesen Arzneimittelpackungen 16 beispielsweise um solche Arzneimittelpackungen handelt, die häufig in mehrfacher Anzahl und/oder mit einer hohen Frequenz benötigt werden. Bei der in Figur 1 dargestellten Ausführungsform ist in dem senkrechten Schacht 14, der sich über mehrere Regalböden 4 hinweg erstreckt, ein Lift 17 angeordnet, der eine vertikal verfahrbare Transportfläche 18 aufweist.

Die benachbart zu dem vertikalen Schacht 14 auf den Regalböden 4 angeordneten Arzneimittel 16 können nunmehr wie folgt ausgelagert werden. Eine vorzugsweise mit dem Regalbediengerät 3 verbundene Einrichtung zum Verschieben der Arzneimittelpackungen 16 greift an die Arzneimittelpackungen 16 an und schiebt diese von dem Regalboden 4 über den Rand 15 in Richtung des Schachts 14. Zuvor wird die Transportfläche 18 des Lifts 17 so positioniert, daß die über den Rand 15 hinausgeschobenen Arzneimittelpackungen 16 auf der Transportfläche 18 aufgefangen werden. Vorzugsweise umfaßt die Einrichtung zum horizontalen Verschieben der Arzneimittelpackungen 16 wenigstens ein Element der Greifeinrichtung, beispielsweise eine Greiferbacke eines Backengreifers, die in die (schmalen) Zwischenräume zwischen den nebeneinander gelagerten Packungen 16, 5 eingefahren werden kann.

Die auf der Transportfläche 18 des Lifts 17 aufgefangenen auszulagernden Stückgüter werden dann mit Hilfe einer Transporteinrichtung zu einer Ausgabestelle transportiert. Bei dem im Figur 1 gezeigten Ausführungsbeispiel ist hinter dem Lift 17 schematisch ein Fenster 19 dargestellt, in das die auf der Transportfläche 18 befindlichen Stückgüter entweder geschoben oder abgekippt werden könnten. Von dort gelangen die Stückgüter beispielsweise auf ein Transportband, das die Stückgüter zu der Ausgabestelle befördert. Anstelle des Lifts sind eine Reihe alternativer Ausführungsformen einer Auffangeinrichtung zum Auffangen der vor dem Regalboden 4 über den Rand 15 hinausgeschobenen Stückgüter denkbar. Beispielsweise können Fallschächte und/oder Rutschen vorgesehen sein, die die heruntergeschobenen auszulagernden Stückgüter zu einer Ausgabestelle und/oder einem Transportband führen.

Bei dem automatisierten Regallager können an den Regalböden 4 in der Nähe des vertikalen Schachts 14 zusätzlich Einrichtungen vorgesehen sein, die gewährleisten, daß die seitlich verschobenen Stückgüter 16 ausschließlich in den Schacht 14 gelangen. Beispielsweise könnten die dem Bediengerät zugewandten vorderen Ränder der Regalböden 4 eine geringfügig erhöhte Kante aufweisen, damit beim seitlichen Schieben keine Arzneimittelpackungen über den vorderen Rand des Regalbodens herunterfallen können.

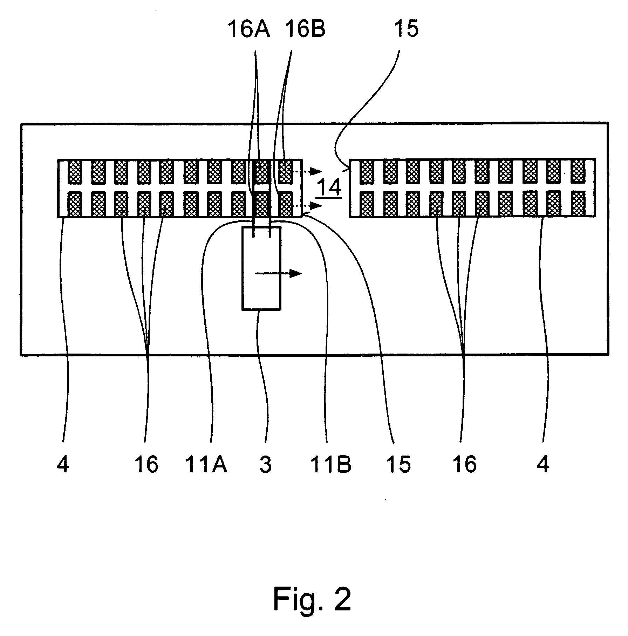

Figur 2 zeigte eine schematische Draufsicht auf zwei nebeneinander angeordnete Regalböden 4, die jeweils einen an den Schacht 14 angrenzenden Rand 15 aufweisen. Auf den Regalböden sind jeweils eine Mehrzahl häufig benötigter gleichartiger Arzneimittelpackungen 16 gelagert. Zusätzlich können auf (nicht dargestellten) darüber bzw. darunter angeordneten weiteren Regalböden 4 weitere Arzneimittelpackungen 16 desselben oder eines anderen Formats angeordnet bzw. gelagert sein.

Bei einer bevorzugten Form der Auslagerung ist es möglich, mit einer einzigen Bewegung des Bediengeräts 3 sowohl Arzneimittelpackungen 16B durch Verschieben über den Rand 15 in den Schacht 14 auszulagern als auch andere Arzneimittelpackungen 16A in Richtung des Randes 15 umzulagern. Der in Figur 2 schematisch dargestellte Greifer des Bediengeräts 3 ergreift mit seinen Parallelbacken 11A und 11B zwei auf dem Regalboden 4 hintereinander angeordnete Arzneimittelpackungen 16A (gleicher Abmessungen). Anschließend bewegt sich der Greifer horizontal auf den Schacht 14 zu. Dabei werden die zwischen der Greiferbacke 11B und dem Schacht 14 benachbart zum Rand 15 angeordneten Arzneimittelpackungen 16B horizontal über den Rand 15 in den Schacht 14 verschoben und von der Auffangeinrichtung aufgefangen und ausgelagert. In ähnlicher Weise ist es möglich, beispielsweise zwei Packungen zu ergreifen und 4, 6, 8, usw. Packungen über den Rand 15 in den Schacht 14 zu verschieben. Auch eine ungerade Anzahl von Packungen kann bei dieser in Figur 2 dargestellten Anordnung der Packungen ausgelagert werden, indem der Greifer 11A, 11B kurz vor dem Verschieben des letzten auf den Regalboden 4 verbleibenden Packungspaars 16B ein Stück aus dem Regal herausgefahren wird, so daß nur noch die vordere Arzneimittelpackung 16A ergriffen und verschoben wird. In diesem Fall bleibt die hintere Packung 16B auf dem Regalboden 4 liegen, während die vordere Packung 16B in den Schacht 14 verschoben wird und an deren Stelle auf dem Regalboden 4 die vordere Packung 16A tritt.

Ein weiterer Vorteil des in Figur 2 dargestellten Verfahrens, bei dem die auszulagernden Packungen nicht durch einen leeren Backengreifer 11A, 11B, sondern durch einen Backengreifer, der Packungen ergriffen hat, verschoben werden, besteht darin, daß durch das Greifen von Packungen die Parallelbacken 11A, 11B eine höhere Stabilität erhalten und sich somit beim Verschieben der Packungen 16B nicht deformieren oder eine Schrägstellung einnehmen.

Im Rahmen des Erfindungsgedankens sind zahlreiche alternative Ausführungsformen und Kombinationen denkbar. Beispielsweise können mehrere Bediengeräte eingesetzt werden, von denen einige oder sämtliche mit einer Verschiebeeinrichtung ausgestattet sind. Die zwischen den Regalböden eingebrachten Schächte zur Aufnahme der Auffangeinrichtungen (Lift, Fallschacht oder Rutschen beispielsweise) können sich über die gesamte Höhe des Regals oder über nur wenige Regalböden hinweg erstrecken. Es können mehrere derartige Schächte mit Auffangeinrichtungen und entsprechend angekoppelten Transporteinrichtungen vorgesehen sein. Wird als Auffangeinrichtung ein Fallschacht verwendet, so kann am Boden des Fallschachts eine die Fallbewegung der Stückgüter abbremsende Einrichtung oder eine die Fallbewegung der Stückgüter in eine Rutschbewegung umlenkende Einrichtung angeordnet sein. Die Auffangeinrichtung kann auch mehrere Rutschen umfassen, die jeweils an den Rändern 15 der Regalböden 4 ansetzen. Die Auffangeinrichtung kann eine Wendelrutsche umfassen, die jeweils über kurze Zuführrutschen mit den Rändern 15 mehrerer übereinander angeordneter Regalböden 4 gekoppelt ist.

Die erfindungsgemäße Einrichtung zum gleichzeitigen Auslagern mehrerer Stückgüter läßt sich auch nachträglich in vorhandene Anlagen integrieren, indem eine Auffangeinrichtung benachbart zu den Rändern vorhandener Regalböden angeordnet wird. Die Auffangeinrichtung braucht sich nicht in Längsrichtung der Regalböden neben den Regalböden zu befinden, sie kann auch hinter den Regalböden angeordnet sein, so daß die Stückgüter zum Auslagern von dem Regalbediengerät nach hinten über den Rand des Regalbodens hinausgeschoben werden.

## Patentansprüche

1. Verfahren zum Auslagern von Stückgütern (16) aus einem automatisierten Regallager (1) mit wenigstens einem mehrere übereinander angeordnete, sich in einer Längsrichtung erstreckende Regalböden (4) aufweisenden Regal (2) und wenigstens einem eine Greifeinrichtung (11, 12) aufweisenden und vor dem Regal in vertikaler Richtung und in der Längsrichtung bewegbaren Regalbediengerät (3), wobei:
a) mehrere Stückgüter (16) auf einem Regalboden gelagert werden;
b) ein oder mehrere auszulagernde Stückgüter (16) der mehreren Stückgüter mit Hilfe einer Schiebeeinrichtung auf dem Regalboden (4) in horizontaler Richtung derart verschoben werden, daß sie über einen Rand (15) vom Regalboden (4) herunterge-schoben werden, ohne dabei von der Greifeinrichtung (11, 12) des Bediengeräts festgehalten zu werden;
c) die vom Regalboden (4) heruntergeschobenen auszulagernden Stückgüter (16) aufgefangen und zu einer Ausgabestelle (19) transportiert werden.

2. Verfahren nach Anspruch 1, **dadurch gekennzeichnet, daß** die auszulagernden Stückgüter (16) im Schritt b) mit Hilfe einer mit dem Bediengerät (3) verbundenen Schiebeeinrichtung verschoben werden.

3. Verfahren nach Anspruch 2, **dadurch gekennzeichnet, daß** die auszulagernden Stückgüter (16) mit Hilfe eines Elements eines mit dem Bediengerät (3) verbundenen Backengreifers (11) verschoben werden.

4. Verfahren nach einem der Ansprüche 1 bis 3, **dadurch gekennzeichnet, daß** die auszulagernden Stückgüter (16) im Schritt b) in einer quer zu einer normalen Ein- und Auslagerrichtung orientierten Richtung über den Rand (15) heruntergeschoben werden.

5. Verfahren nach Anspruch 4, **dadurch gekennzeichnet, daß** die auszulagernden Stückgüter (16) in der Längsrichtung über einen quer zur Längsrichtung verlaufenden Rand (15) des Regalbodens (4) heruntergeschoben werden.

6. Verfahren nach einem der Ansprüche 1 bis 5, **dadurch gekennzeichnet, daß** mehrere zusammen auszulagernde Stückgüter (16) im Schritt a) benachbart zu dem Rand (15) auf dem Regalboden (4) als zusammenhängende Gruppe gelagert werden.

7. Verfahren nach Anspruch 6, **dadurch gekennzeichnet, daß** im Schritt b) wenigstens ein benachbart zu der Gruppe auszulagernder Stückgüter (16B) auf dem Regalboden (4) angeordnetes Stückgut (16A) von der Greifeinrichtung (11, 12) des Bediengeräts (3) gegriffen und horizontal in Richtung des Randes (15) des Regalbodens (4) derart verschoben wird, daß dabei einerseits die Gruppe auszula-gernder Stückgüter (16B) von dem Regalboden (4) heruntergeschoben wird und andererseits das wenigstens eine ergriffene Stückgut (16A) zu einem benachbart zu dem Rand (15) des Regalbodens (4) angeordneten Ort umgelagert wird.

8. Verfahren nach einem der Ansprüche 1 bis 5, **dadurch gekennzeichnet, daß** im Schritt b) beim Verschieben des einen oder der mehreren auszulagernden Stückgüter (16) mit Hilfe der Schiebeeinrichtung gleichzeitig ein oder mehrere weitere Stückgüter (16) auf dem Regalboden (4) umgelagert werden.

9. Verfahren nach einem der Ansprüche 1 bis 8, **dadurch gekennzeichnet, daß** die Stückgüter (16) im Schritt c) mit Hilfe einer Fallschacht-Anordnung (14) aufgefangen werden.

10. Verfahren nach einem der Ansprüche 1 bis 8, **dadurch gekennzeichnet, daß** die Stückgüter (16) im Schritt c) von einem eine Transportfläche (18) aufweisenden Lift (17) aufgefangen werden, wobei die Transportfläche (18) vor dem Schritt b) derart bewegt wird, daß sie benachbart zu dem Rand (15) des Regalbodens (4) und in derselben horizontalen Ebene oder in einem vorgegebe-nen Abstand unterhalb der Ebene des Regalbodens (4) positioniert wird.

11. Automatisiertes Regallager (1) zum Lagern von Stückgütern (5, 16) mit wenigstens einem mehrere übereinander angeordnete, sich in einer Längsrichtung erstreckende Regalböden (2) aufweisenden Regal (2) und wenigstens einem eine Greifeinrichtung (11, 12) aufweisenden und vor dem Regal (2) in vertikaler Richtung und in der Längsrichtung bewegbaren Regalbediengerät (3),
**gekennzeichnet durch**:
eine Einrichtung zum horizontalen Verschieben der Stückgüter (16) auf den Regalböden (4) in deren Längsrichtung,
eine Auffangeinrichtung, die benachbart zu einem Rand (15) wenigstens eines Regalbodens (4) so angeordnet ist, daß sie von dem wenigstens einen Regalboden (4) über dessen Rand (15) hinaus heruntergeschobene Stückgüter (16) aufnehmen kann, und
eine mit der Auffangeinrichtung gekoppelte Transporteinrichtung, die die von der Auffangeinrichtung aufgenommenen Stückgüter (16) zu einer Ausgabestelle (19) transportieren kann.

12. Automatisiertes Regallager nach Anspruch 11, **dadurch gekennzeichnet, daß** die Einrichtung zum horizontalen Verschieben mit einem Regalbediengerät (3) verbunden ist.

13. Automatisiertes Regallager nach Anspruch 12, **dadurch gekennzeichnet, daß** die Einrichtung zum horizontalen Verschieben wenigstens ein Element der Greifeinrichtung (11, 12) umfaßt.

14. Automatisiertes Regallager nach einem der Ansprüche 11 bis 13, **dadurch gekennzeichnet, daß** mehrere quer zur Längsrichtung der Regalböden (4) verlaufende Ränder (15) mehrerer übereinander angeordneter Regalböden (4) an die Auffangeinrichtung angrenzen.

15. Automatisiertes Regallager nach Anspruch 14, **dadurch gekennzeichnet, daß** die mehreren übereinander angeordneten Ränder (15), die an die Auffangeinrichtung angrenzen, entlang einer senkrechten Ebene ausgerichtet sind.

16. Automatisiertes Regallager nach einem der Ansprüche 11 bis 15, **dadurch gekennzeichnet, daß** die Auffangeinrichtung einen Fallschacht (14) umfaßt.

17. Automatisiertes Regallager nach Anspruch 16, **dadurch gekennzeichnet, daß** am Boden des Fallschachts (14) eine die Fallbewegung der Stückgüter (16) abbremsende Einrichtung angeordnet ist.

18. Automatisiertes Regallager nach einem der Ansprüche 11 bis 15, **dadurch gekennzeichnet, daß** die Auffangeinrich-tung eine benachbart zum Rand (15) des Regalbodens (4) angeordnete Rutsche umfaßt.

19. Automatisiertes Regallager nach Anspruch 18, **dadurch gekennzeichnet, daß** die Auffangeinrichtung eine Wendelrutsche umfaßt, die jeweils über kurze Zuführrutschen mit den Rändern (15) mehrerer übereinander angeordneter Regalböden (4) gekoppelt ist.

20. Automatisiertes Regallager nach einem der Ansprüche 11 bis 15, **dadurch gekennzeichnet, daß** die Auffangeinrichtung wenigstens einen in einem senkrechten Schacht (14) angeordneten Lift (17) mit wenigstens einer vertikal verfahrbaren Transportfläche (18) umfaßt, wobei die Ränder (15) mehrerer Regalböden (4) an den Schacht (14) angrenzen.

21. Automatisiertes Regallager nach Anspruch 20, **dadurch gekennzeichnet, daß** sich der Schacht (14) über die Höhe mehrerer Regalböden (4) des Regals (1) erstreckt und die Ränder (15) der Regalböden (4) an einander gegenüberliegende Seiten des Schachts (14) angrenzen.

## Claims

1. Method of removing separate products (16) from an automated shelved storage system (1) with at least one shelving unit (2) having a plurality of shelf bases (4) disposed one above the other and extending in a longitudinal direction and at least one shelf operating device (3) which has a gripper arrangement (11, 12) and is movable in front of the shelving unit in the vertical direction and in the longitudinal direction, wherein:
a) a plurality of separate products (16) are stored on one shelf base;
b) one or several separate products (16) to be removed from the plurality of separate products are displaced in the horizontal direction with the aid of a sliding arrangement in such a way that they are pushed over an edge (15) of the shelf base (4) without being held by the gripper arrangement (11, 12) of the operating device;
c) the separate products (16) to be removed which have been pushed down from the shelf base (4) are collected and transported to an issuing point (19).

2. Method as claimed in Claim 1, **characterised in that** the separate products (16) to be removed are displaced in step b) with the aid of a sliding arrangement connected to the operating device (3).

3. Method as claimed in Claim 2, **characterised in that** the separate products (16) to be removed are displaced with the aid of an element of a jaw gripper (11) connected to the operating device (3).

4. Method as claimed in any one of Claims 1 to 3, **characterised in that** the separate products (16) to be removed are pushed down over the edge (15) in step b) in a direction oriented transversely with respect to a normal storing and removing direction.

5. Method as claimed in Claim 4, **characterised in that** the separate products (16) to be removed are pushed down in the longitudinal direction over an edge (15) of the shelf base (4) extending transversely with respect to the longitudinal direction.

6. Method as claimed in any one of Claims 1 to 5, **characterised in that** a plurality of separate products (16) to be removed together are stored as a cohesive group adjacent to the edge (15) on the shelf base (4) in step a).

7. Method as claimed in Claim 6, **characterised in that** in step b) at least one separate product (16A) disposed on the shelf base (4) adjacent to the group of separate products (16B) to be removed is gripped by the gripper arrangement (11, 12) of the operating device (3) and is displaced horizontally in the direction of the edge (15) of the shelf base (4) in such a way that on the one hand the group of separate products (16B) to be removed are pushed down from the shelf base (4) and on the other hand the at least one gripped separate product (16A) is transferred to a location adjacent to the edge (15) of the shelf base (4).

8. Method as claimed in any one of Claims 1 to 5, **characterised in that** in step b) during the displacement of the one or several separate products (16) to be removed with the aid of the sliding arrangement one or several further separate products (16) are simultaneously transferred to the shelf base (4).

9. Method as claimed in any one of Claims 1 to 8, **characterised in that** the separate products (16) are collected in step c) with the aid of a drop shaft arrangement (14).

10. Method as claimed in any one of Claims 1 to 8, **characterised in that** the separate products (16) are collected in step c) by a lift (17) having a transport surface (18), wherein the transport surface (18) is moved before step b) in such a way that it is positioned adjacent to the edge (15) of the shelf base (4) and in the same horizontal plane or at a predetermined distance below the plane of the shelf base (4).

11. Automated shelved storage system (1) for the storage of separate products (5, 16) with at least one shelving unit (2) having a plurality of shelf bases (4) disposed one above the other and extending in a longitudinal direction and at least one shelf operating device (3) which has a gripper arrangement (11, 12) and is movable in front of the shelving unit in the vertical direction and in the longitudinal direction, **characterised by**:
- an arrangement for horizontal displacement of the separate products (16) on the shelf base (4) in the longitudinal direction thereof,
- a collecting arrangement which is disposed adjacent to an edge (15) of at least one shelf base (4) so that it can pick up separate products (16) which have been pushed out downwards from the at least one shelf base (4) over the edge (15) thereof, and
- a transport arrangement which is coupled to the collecting arrangement and can transport the separate products (16) picked up by the collecting arrangement to an issuing point (19).

12. Automated shelved storage system as claimed in Claim 11, **characterised in that** the arrangement for horizontal displacement is connected to a shelf operating device (3).

13. Automated shelved storage system as claimed in Claim 12, **characterised in that** the arrangement for horizontal displacement comprises at least one element of the gripper arrangement (11, 12).

14. Automated shelved storage system as claimed in any one of Claims 11 to 13, **characterised in that** a plurality of edges (15), which extend transversely with respect to the longitudinal direction of the shelf bases (4), of a plurality of shelf bases (4) disposed one above the other adjoin the collecting arrangement.

15. Automated shelved storage system as claimed in Claim 14, **characterised in that** the plurality of edges (15) disposed one above the other which adjoin the collecting arrangement are oriented along a vertical plane.

16. Automated shelved storage system as claimed in any one of Claims 11 to 15, **characterised in that** the collecting arrangement comprises a drop shaft (14).

17. Automated shelved storage system as claimed in Claim 16, **characterised in that** an arrangement which retards the falling movement of the separate products (16) is disposed at the base of the drop shaft (14).

18. Automated shelved storage system as-claimed in any one of Claims 11 to 15, **characterised in that** the collecting arrangement comprises a chute disposed adjacent to the edge (15) of the shelf base (4).

19. Automated shelved storage system as claimed in Claim 18, **characterised in that** the collecting arrangement comprises a helical chute which is coupled in each case by way of short delivery chutes to the edges (15) of a plurality of shelf bases (4) disposed one above the other.

20. Automated shelved storage system as claimed in any one of Claims 11 to 15, **characterised in that** the collecting arrangement comprises at least one lift (17) disposed in a vertical shaft (14) and having at least one vertically movable transport surface (18), wherein the edges (15) of a plurality of shelf bases (4) adjoin the shaft (14).

21. Automated shelved storage system as claimed in Claim 20, **characterised in that** the shaft (14) extends over the height of a plurality of shelf bases (4) of the shelving unit and the edges (15) of the shelf bases (4) adjoin sides of the shaft (14) which lie opposite one another.

## Revendications

1. Procédé d'extraction de petites marchandises (16) d'un magasin à rayonnage(s) automatisé (1) comportant au moins un rayonnage (2) présentant plusieurs tablettes (4) placées les unes au-dessus des autres et s'étendant dans une direction longitudinale et au moins un appareil de desserte de rayonnage (3) présentant un dispositif de préhension (11, 12) et mobile devant le rayonnage dans la direction verticale et dans la direction longitudinale, dans lequel
a) plusieurs petites marchandises (16) sont entreposées sur une tablette,
b) une ou plusieurs petites marchandises (16) à extraire sont déplacées en direction horizontale sur la tablette (4) au moyen d'un dispositif de poussée de façon telle qu'elles soient descendues de la tablette (4) en en franchissant un bord (15) sans être tenues par le dispositif de préhension (11, 12) de l'appareil de desserte,
c) les petites marchandises (16) à extraire descendues de la tablette (4) sont captées et conduites à un endroit de sortie (19).

2. Procédé selon la revendication 1, **caractérisé par le fait que** les petites marchandises (16) à extraire sont, dans l'étape b), déplacées au moyen d'un dispositif de poussée lié à l'appareil de desserte (3).

3. Procédé selon la revendication 2, **caractérisé par le fait que** les petites marchandises (16) à extraire sont déplacées au moyen d'un élément d'un préhenseur à mâchoires (11) lié à l'appareil de desserte (3).

4. Procédé selon l'une des revendications 1 à 3, **caractérisé par le fait que** les petites marchandises (16) à extraire sont, dans l'étape b), descendues dans une direction orientée en travers d'une direction normale d'emmagasinage et d'extraction en franchissant le bord (15).

5. Procédé selon la revendication 4, **caractérisé par le fait que** les petites marchandises (16) à extraire sont descendues dans la direction longitudinale en franchissant un bord (15) de la tablette (4) s'étendant en travers de la direction longitudinale de celle-ci.

6. Procédé selon l'une des revendications 1 à 5, **caractérisé par le fait que** plusieurs petites marchandises (16) à extraire ensemble sont, dans l'étape a), entreposées à proximité du bord (15) sur la tablette (4) sous forme de groupe lié.

7. Procédé selon la revendication 6, **caractérisé par le fait que** dans l'étape b), au moins un petite marchandise (16A) située sur la tablette (4) à proximité du groupe de petites marchandises à extraire (16B) est saisie par le dispositif de préhension (11, 12) de l'appareil de desserte (3) et déplacée horizontalement en direction du bord (15) de la tablette (4) de façon telle que d'une part, le groupe de petites marchandises à extraire (16B) soit descendu de la tablette (4), et d'autre part, la ou les petites marchandises saisies (16A) soient menées à un endroit voisin du bord (15) de la tablette (4).

8. Procédé selon l'une des revendications 1 à 5, **caractérisé par le fait que** dans l'étape b), lors du déplacement au moyen du dispositif de poussée de la ou des petites marchandises (16) à extraire, en même temps, une ou plusieurs autres petites marchandises (16) sont déplacées sur la tablette (4).

9. Procédé selon l'une des revendications 1 à 8, **caractérisé par le fait que** les petites marchandises (16) sont, dans l'étape c), reçues par un dispositif à puits de chute (14).

10. Procédé selon l'une des revendications 1 à 8, **caractérisé par le fait que** les petites marchandises (16) sont, dans l'étape c), reçues par un élévateur (17) présentant une surface de transport (18), et cette surface de transport (18) est, avant l'étape b), déplacée de façon à être amenée à proximité du bord (15) de la tablette (4) et dans le même plan horizontal ou à une distance fixée au-dessous du plan de la tablette (4).

11. Magasin à rayonnage(s) automatisé (1) pour l'emmagasinage de petites marchandises (5, 16), comportant au moins un rayonnage (2) présentant plusieurs tablettes (2) placées les unes au-dessus des autres et s'étendant dans une direction longitudinale et au moins un appareil de desserte de rayonnage (3) présentant un dispositif de préhension (11, 12) et mobile devant le rayonnage (2) en direction verticale et dans la direction longitudinale,
**caractérisé par**
un dispositif de déplacement horizontal des petites marchandises (16) sur les tablettes (4) dans la direction longitudinale de celles-ci,
un dispositif récepteur placé à proximité d'un bord (15) d'au moins une tablette (4) de façon à pouvoir recevoir des petites marchandises (16) descendues de la tablette ou des tablettes (4) en franchissant le bord (15) de celle(s)-ci, et
un dispositif de transport accouplé au dispositif récepteur qui peut conduire à un endroit de sortie (19) les petites marchandises (16) reçues par le dispositif récepteur.

12. Magasin à rayonnage(s) automatisé selon la revendication 11, **caractérisé par le fait que** le dispositif de déplacement horizontal est lié à un appareil de desserte de rayonnage (3).

13. Magasin à rayonnage(s) automatisé selon la revendication 12, **caractérisé par le fait que** le dispositif de déplacement horizontal comprend au moins un élément du dispositif de préhension (11, 12).

14. Magasin à rayonnage(s) automatisé selon l'une des revendications 11 à 13, **caractérisé par le fait que** plusieurs bords (15) s'étendant en travers de la direction longitudinale des tablettes (4) de plusieurs tablettes (4) placées les unes au-dessus des autres sont contigus au dispositif récepteur.

15. Magasin à rayonnage(s) automatisé selon la revendication 14, **caractérisé par le fait que** les bords (15) situés les uns au-dessus des autres qui sont contigus au dispositif récepteur sont dans un même plan vertical.

16. Magasin à rayonnage(s) automatisé selon l'une des revendications 11 à 15, **caractérisé par le fait que** le dispositif récepteur comprend un puits de chute (14).

17. Magasin à rayonnage(s) automatisé selon la revendication 16, **caractérisé par le fait qu'**au fond du puits de chute (14) est placé un dispositif qui freine le mouvement de chute des petites marchandises (16).

18. Magasin à rayonnage(s) automatisé selon l'une des revendications 11 à 15, **caractérisé par le fait que** le dispositif récepteur comprend un toboggan placé à proximité du bord (15) de la tablette (4).

19. Magasin à rayonnage(s) automatisé selon la revendication 18, **caractérisé par le fait que** le dispositif récepteur comprend un toboggan hélicoïdal qui est relié par des courts toboggans d'amenée aux bords (15) de plusieurs tablettes (4) placées les unes au-dessus des autres.

20. Magasin à rayonnage(s) automatisé selon l'une des revendications 11 à 15, **caractérisé par le fait que** le dispositif récepteur comprend au moins un élévateur (17) placé dans un puits vertical (14) qui présente au moins une surface de transport mobile verticalement (18), les bords (15) de plusieurs tablettes (4) étant contigus au puits (14).

21. Magasin à rayonnage(s) automatisé selon la revendication 20, **caractérisé par le fait que** le puits (14) s'étend sur la hauteur de plusieurs tablettes (4) du rayonnage (1) et les bords (15) des tablettes (4) sont contigus à des côtés opposés du puits (14).
